# FASCICULE DE BREVET EUROPEEN

(11) **EP 1 077 814 B1**
(45) Date de publication et mention de la délivrance du brevet: **26.03.2003**
(21) Numéro de dépôt: 99924817.2
(22) Date de dépôt: 23.04.1999
(51) Int. Cl.: B60C 9/20, B60C 9/28

(54) **ARMATURE DE SOMMET DE PNEUMATIQUE**
SCHEITELBEWEHRUNG FÜR LUFTREIFEN
TYRE BREAKER PLY REINFORCEMENT

(30) Priorité: 11.05.1998 FR 9806000
(43) Date de publication de la demande: 28.02.2001
(73) Titulaire: COMPAGNIE GENERALE DES ETABLISSEMENTS MICHELIN-MICHELIN & CIE, 63040 Clermont-Ferrand Cédex (FR)
(72) Inventeur: CLUZEL, Guy, F-63110 Beaumont (FR)
(74) Mandataire: Le Cam, Stéphane
(86) Numéro de dépôt international: EP9902741
(87) Numéro de publication internationale: WO99058350

(56) Documents cités:
- DE-A- 1 927 047
- FR-A- 2 118 916
- FR-A- 2 728 510
- FR-A- 2 744 955

## Description

L'invention concerne un pneumatique à armature de carcasse radiale ancrée dans chaque bourrelet à au moins une tringle, et comprenant une armature de sommet constituée par au moins deux nappes dites de travail, superposées et formées de fils ou câbles parallèles entre eux dans chaque nappe et croisés d'une nappe à l'autre en formant avec la direction circonférentielle du pneumatique des angles au plus égaux à 45° en valeur absolue.

La demande française FR 2 728 510, concerne un pneumatique tel que décrit ci-dessus et plus particulièrement un pneumatique du type "Poids-Lourds", dont le rapport de la hauteur sur jante H sur la largeur axiale maximale S est au plus égal à 0,60. Ladite demande préconise, en vue d'améliorer l'endurance de l'armature de sommet d'un tel pneumatique, ainsi que la régularité de l'usure de sa bande de roulement, une architecture d'armature de sommet caractérisée par la présence combinée dans ladite armature d'une nappe axialement continue de câbles inextensibles faisant avec la direction circonférentielle du pneumatique un angle au moins égal à 60°, et d'une nappe, d'éléments métalliques orientés sensiblement parallèlement à la direction circonférentielle, disposée radialement entre les deux nappes de sommet de travail.

Une telle architecture a pour but d'abaisser les températures de fonctionnement régnant en bords de nappes de travail, la largeur de la nappe additionnelle de câbles circonférentiels étant moindre que les largeurs de nappes de travail.

Certains pneumatiques actuels, dits "routiers", sont destinés à rouler à grande vitesse et sur des trajets de plus en plus longs, du fait de l'amélioration du réseau routier et de la croissance du réseau autoroutier dans le monde. L'ensemble des conditions, sous lesquelles un tel pneumatique est appelé à rouler, permet sans aucun doute un accroissement du nombre de kilomètres parcourus, l'usure du pneumatique étant moindre, par contre l'endurance de ce dernier et en particulier de l'armature de sommet est pénalisée. Le manque d'endurance concerne aussi bien la résistance à la fatigue des nappes de sommet, et en particulier la résistance à la séparation entre extrémités de nappes, que la résistance à la fatigue des câbles de la portion d'armature de carcasse située sous l'armature de sommet, la première insuffisance étant fortement influencée par la température de fonctionnement régnant en bordures des nappes de travail, que ce soit en roulage ligne droite ou en roulage en dérive.

Les problèmes cités ci-dessus ont été, de manière satisfaisante, résolus en précisant les modalités d'application du principe d'architecture décrit ci-dessus. Ainsi, la demande française FR 2 744 955, correspondant au préambule de la revendication 1, revendique et décrit un pneumatique à armature de carcasse radiale, de rapport de forme H/S au moins égal à 0,60, et ayant une armature de sommet comprenant au moins deux nappes de sommet de travail en câbles inextensibles, croisés d'une nappe à l'autre, en faisant avec la direction circonférentielle des angles compris entre 10° et 45°, et, en l'absence de toute nappe formée de câbles inextensibles faisant avec la direction circonférentielle un angle supérieur à 45°, une nappe additionnelle, continue axialement, formée d'éléments métalliques orientés sensiblement parallèlement à la direction circonférentielle, placée radialement entre les nappes de travail, et dont la largeur axiale est au moins égale à 1,05 fois la largeur axiale de la nappe de sommet de travail la plus large, et de préférence au moins égale à 1,1 fois la largeur de ladite nappe de sommet de travail la plus large.

Si les problèmes concernant la séparation entre nappes de travail et la résistance à la fatigue des câbles d'armature de carcasse semblent résolus, si les températures de fonctionnement sont fortement abaissées, quelque soit le rapport de forme du pneumatique, par contre les roulages prolongés sous dérive des pneumatiques ainsi construits et ayant un rapport de forme au plus égal à 0,60, font apparaître des ruptures de fatigue des câbles de la nappe additionnelle, et plus particulièrement des bords de ladite nappe, que la nappe dite de triangulation soit présente ou non.

L'invention a pour but d'obtenir, pour le pneumatique considéré, le meilleur compromis possible entre les différentes qualités que doivent posséder les armatures d'un tel pneumatique, à savoir la résistance à la fatigue de tous les éléments de renforcement des nappes d'armatures, la résistance à la séparation entre nappes, la température de fonctionnement la plus basse possible, sans oublier le poids du pneumatique et le coût de revient industriel les plus bas.

Le pneumatique, conforme à l'invention, ayant une armature de carcasse radiale, une armature de sommet comprenant au moins deux nappes de sommet de travail en éléments de renforcement inextensibles, croisés d'une nappe à l'autre nappe, en faisant avec la direction circonférentielle des angles compris entre 10° et 45°, et une nappe additionnelle, continue axialement, formée d'éléments de renforcement métalliques, placée radialement entre les nappes de travail, et dont la largeur axiale est au moins égale à 1,1 fois la largeur axiale de la nappe de sommet de travail la plus large, caractérisé en ce que les éléments de renforcement de la nappe additionnelle sont des éléments métalliques continus, inextensibles et sensiblement radiaux.

La nappe additionnelle possède avantageusement une courbure méridienne sensiblement nulle et est séparée des première et deuxième nappes de travail par les profilés nécessaires, de forme sensiblement triangulaire. Il faut entendre par courbure méridienne sensiblement nulle de ladite nappe une courbure dont le rayon est au moins égal à 2,00 fois le rayon de courbure équatorial de ladite nappe.

Il faut entendre par câble inextensible un câble, par exemple en acier, qui a un allongement relatif inférieur à 0,5 %, mesuré à 10 % de sa charge de rupture.

Des éléments métalliques sensiblement radiaux sont des éléments faisant avec la direction circonférentielle des angles compris dans l'intervalle + 85°, - 85° autour de 0°.

L'armature de sommet, conforme à l'invention, sera avantageusement complétée par une nappe de sommet dite de protection, formée de câbles métalliques élastiques en acier orientés par rapport à la direction circonférentielle avec un angle sensiblement égal à l'angle formé par les câbles de la nappe de sommet de travail radialement la plus à l'extérieur, et dont la largeur axiale est au moins égale à la largeur axiale de la nappe de travail située radialement le plus à l'extérieur.

Quelle que soit la solution décrite ci-dessus, l'armature de sommet peut aussi être complétée, radialement à l'intérieur entre l'armature de carcasse et la nappe de travail radialement intérieure la plus proche de ladite armature de carcasse, par une nappe dite de triangulation d'éléments de renforcement inextensibles faisant, avec la direction circonférentielle, un angle supérieur à 60° et de même sens que celui de l'angle formé par les éléments de renforcement de la nappe radialement la plus proche de l'armature de carcasse. Ladite nappe de triangulation peut avoir une largeur axiale inférieure à ladite nappe de travail la plus large, qui est, dans l'armature de sommet considérée, radialement la plus proche de l'armature de carcasse. Ladite nappe de triangulation peut aussi avoir de manière avantageuse une largeur axiale supérieure à la largeur de la nappe de travail la plus large.

Les caractéristiques et avantages de l'invention seront mieux compris à l'aide de la description qui suit et qui se réfère au dessin, illustrant à titre non limitatif un exemple d'exécution, et sur lequel :
- la figure 1 représente schématiquement, vue en section méridienne, une armature de sommet conforme à l'invention,
- la figure 2 représente schématiquement une deuxième variante d'armature de sommet, conforme à l'invention.

Le pneumatique P, de dimension 385/55.R. 22.5 X, a un rapport de forme H/S égal à 0,55, H étant la hauteur du pneumatique P sur sa jante de montage et S sa largeur axiale maximale. Ledit pneumatique P comprend une armature de carcasse radiale (1) ancrée dans chaque bourrelet à au moins une tringle en formant un retournement, et formée d'une seule nappe de câbles métalliques. Cette armature de carcasse (1) est frettée par une armature de sommet (3), formée radialement de l'intérieur à l'extérieur :
- d'une première nappe de sommet travail (32) formée de câbles métalliques inextensibles en acier, orientés d'un angle α, égal dans le cas montré à 18°,
- surmontant la première nappe de sommet de travail (32), d'une nappe additionnelle (33) formée d'éléments métalliques en acier inextensibles, lesdits éléments étant orientés avec un angle de 90° par rapport à la direction circonférentielle et les bords axialement extérieurs de la première nappe de sommet de travail étant séparés de la nappe additionnelle (33) d'éléments radiaux par des profilés (4) de section transversale sensiblement triangulaire, l'épaisseur e₂ de caoutchouc entre la nappe (32) et la nappe (33), mesurée au niveau de l'extrémité axialement extérieure de la nappe (32) étant sensiblement égale à 2 mm,
- puis d'une deuxième nappe de sommet de travail (34) formée de câbles métalliques identiques à ceux de la première nappe (32), et faisant avec la direction circonférentielle un angle β, opposé à l'angle α et, dans le cas montré, égal audit angle α de 18°, (mais pouvant être différent dudit angle α),
- et enfin d'une dernière nappe (35) de câbles métalliques en acier dits élastiques, orientés par rapport à la direction circonférentielle d'un angle γ de même sens que l'angle β et égal audit angle β, (mais pouvant être différent), cette dernière nappe étant une nappe dite de protection, et des câbles dits élastiques étant des câbles ayant à la rupture un allongement relatif au moins égal à 4 %.

La largeur axiale L₃₂ de la première nappe de travail (32) est égale à 0,75 fois la largeur axiale maximale S₀ de la fibre moyenne de l'armature de carcasse (1), soit 290 mm, ce qui est, pour un pneumatique de forme usuelle très inférieur à la largeur de la bande de roulement, qui est égale, dans le cas étudié, à 325 mm. La largeur axiale L₃₄ de la deuxième nappe de travail (34) est sensiblement égale à la largeur L₃₂, puisqu'égale à 286 mm. La largeur axiale L₃₃ de la nappe additionnelle (33) est égale à 320 mm, ce qui représente 0,827 S₀. En fait, la largeur L₃₃ de la nappe additionnelle (33) est très supérieure à la largeur L₃₂ (L₃₄) de la nappe de travail la plus large. La dernière nappe de sommet (35), dite de protection, a une largeur L₃₅ très légèrement supérieure à la largeur L₃₄ de la nappe de sommet de travail (34), soit 300 mm.

Le module sécant d'extension de la nappe de travail (32), ou de la nappe de travail (34), identique dans le cas présent, puisque formée des mêmes câbles métalliques en acier 14.28 non frettés, inextensibles et continus sur toute la largeur de la nappe, lesdits câbles étant disposés avec le même pas, c'est-à-dire avec le même espace entre câbles (mesuré perpendiculairement auxdits câbles), est préférentiellement supérieure à 5000 daN/mm² à 0,4 % d'allongement relatif, et dans le cas étudié égale à 5500 daN/mm². Quant à la nappe additionnelle (33), son module sécant de compression, pour une contraction relative de 0,4 %, est préférentiellement compris entre 0,33 et 0,66 fois son module d'extension pour un allongement relatif de même grandeur. Dans le cas étudié, la nappe (33) est formée de câbles métalliques en acier 27.23 frettés.

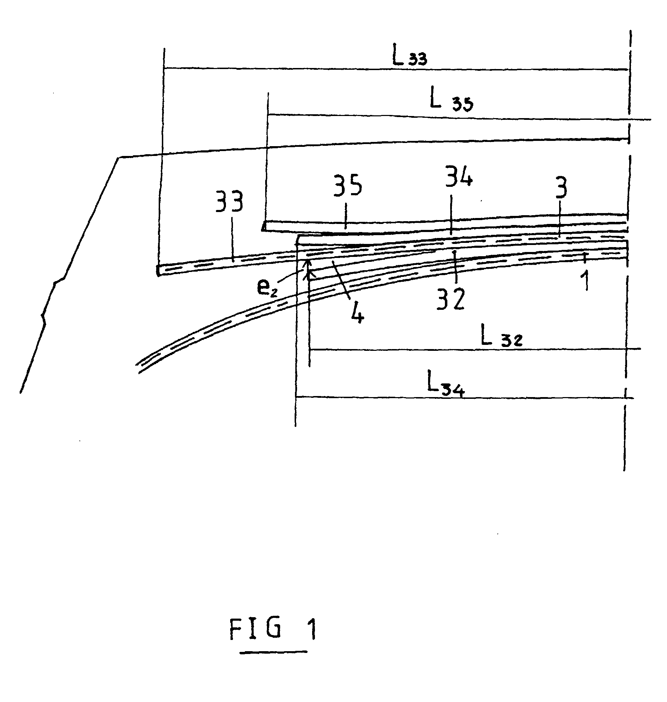

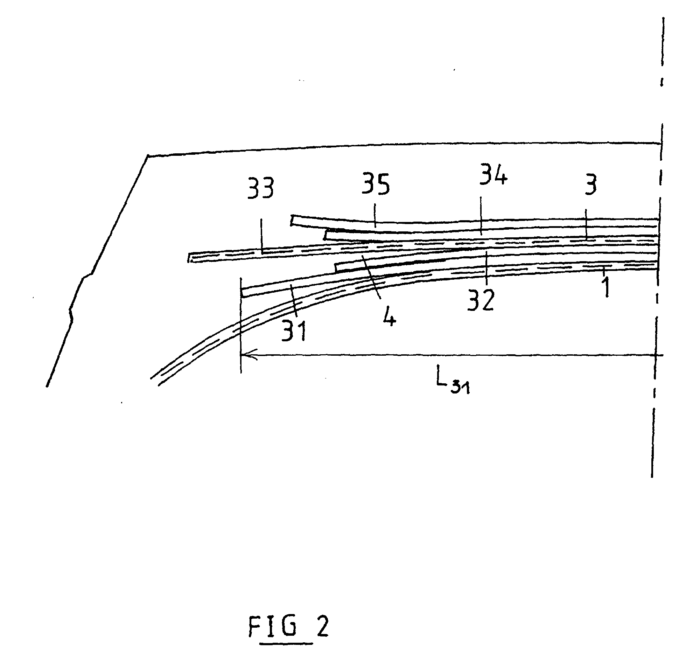

Le pneumatique montré sur la figure 2 diffère du pneumatique de la figure 1 par l'addition d'une nappe dite de triangulation (31), disposée radialement à l'intérieur entre l'armature de carcasse (1) et la nappe de travail (32) radialement intérieure la plus proche de ladite armature de carcasse (1). Ladite nappe de triangulation (31) est formée de câbles métalliques d'acier inextensibles faisant, avec la direction circonférentielle, un angle δ de 65° de même sens que celui de l'angle α formé par les éléments de renforcement de la nappe de travail (32) radialement la plus proche de l'armature de carcasse (1). Ladite nappe de triangulation (31) a une largeur axiale L₃₁ égale à 310 mm et donc supérieure à la largeur de la nappe de travail (32) la plus large.

## Revendications

1. Pneumatique ayant une armature de carcasse radiale (1), une armature de sommet (3) comprenant au moins deux nappes de sommet de travail (32, 34) en éléments de renforcement inextensibles, croisés d'une nappe à l'autre nappe, en faisant avec la direction circonférentielle des angles compris entre 10° et 45°, et une nappe additionnelle (33), continue axialement, formée d'éléments de renforcement métalliques, placée radialement entre les nappes de travail (32, 34), et dont la largeur axiale L₃₃ est au moins égale à 1,1 fois la largeur axiale L₃₂, L₃₄ de la nappe de sommet de travail (32, 34) la plus large, **caractérisé en ce que** les éléments de renforcement de la nappe additionnelle (33) sont des éléments métalliques d'acier continus, inextensibles et sensiblement radiaux.

2. Pneumatique selon la revendication 1, **caractérisé en ce que** la nappe additionnelle (33) possède une courbure méridienne sensiblement nulle.

3. Pneumatique selon l'une des revendications 1 à 2, **caractérisé en ce que** la nappe additionnelle (33) est formée de câbles métalliques frettés, son module sécant de compression pour une contraction relative de 0,4 % étant compris entre 0,33 et 0,66 fois son module sécant d'extension pour un allongement relatif de même grandeur.

4. Pneumatique selon l'une des revendications 1 à 3, **caractérisé en ce que** l'armature de sommet (3) comprend en outre une nappe continue (35), dite de protection, radialement située au dessus de la dernière nappe de travail (34), formée de câbles métalliques élastiques, et dont la largeur axiale L₃₅ est au moins égale à la largeur axiale L₃₄ de la nappe de travail radialement la plus à l'extérieur.

5. Pneumatique selon l'une des revendications 1 à 4, **caractérisé en ce que** l'armature de sommet (3) est complétée, radialement à l'intérieur entre l'armature de carcasse (1) et la nappe de travail (32) radialement intérieure la plus proche de ladite armature de carcasse (1), par une nappe (31) dite de triangulation d'éléments de renforcement inextensibles faisant, avec la direction circonférentielle, un angle supérieur à 60° et de même sens que celui de l'angle formé par les éléments de renforcement de ladite nappe de travail (32).

6. Pneumatique selon la revendication 5, **caractérisé en ce que** la nappe de triangulation (31) a une largeur axiale L₃₁ supérieure à la largeur L₃₂, L₃₄ de la nappe de travail (32, 34) la plus large.

## Claims

1. A tyre having a radial carcass reinforcement (1), a crown reinforcement (3) comprising at least two working crown plies (32, 34) of inextensible reinforcement elements, crossed from one ply to the other ply, forming angles of between 10° and 45° with the circumferential direction, and an additional, axially continuous, ply (33) formed of metallic reinforcement elements which is placed radially between the working plies (32, 34), and the axial width L₃₃ of which is at least 1.1 times the axial width L₃₂, L₃₄ of the widest working crown ply (32, 34), **characterised in that** the reinforcement elements of the additional ply (33) are continuous, inextensible, substantially radial metallic elements made of steel.

2. A tyre according to Claim 1, **characterised in that** the additional ply (33) has a substantially zero meridian curvature.

3. A tyre according to one of Claims 1 to 2, **characterised in that** the additional ply (33) is formed of hooped metal cables, its secant modulus of compression for a relative contraction of 0.4% being between 0.33 and 0.66 times its secant modulus of extension for a relative elongation of the same size.

4. A tyre according to one of Claims 1 to 3, **characterised in that** the crown reinforcement (3) furthermore comprises a continuous so-called protective ply (35) radially located above the last working ply (34), formed of elastic metal cables, and the axial width L₃₅ of which is at least equal to the axial width L₃₄ of the radially outermost working ply.

5. A tyre according to one of Claims 1 to 4, **characterised in that** the crown reinforcement (3) is finished off, radially to the inside between the carcass reinforcement (1) and the radially inner working ply (32) closest to said carcass reinforcement (1), by a so-called triangulation ply (31) of inextensible reinforcement elements, forming with the circumferential direction an angle greater than 60° and of the same direction as that of the angle formed by the reinforcement elements of said working ply (32).

6. A tyre according to Claim 5, **characterised in that** the triangulation ply (31) has an axial width L₃₁ greater than the width L₃₂, L₃₄ of the widest working ply (32, 34).

## Patentansprüche

1. Luftreifen mit radialer Karkassenbewehrung (1), mit einer Scheitelbewehrung (3), die mindestens zwei Arbeitsscheitellagen (32, 34) aus unausdehnbaren Verstärkungselementen, die sich von einer Lage zur anderen kreuzen, indem sie mit der Umfangsrichtung Winkel zwischen 10° und 45° bilden, und eine zusätzliche, axial durchgehende Lage (33) aufweist, die von metallischen Verstärkungselementen gebildet wird, radial zwischen den Arbeitslagen (32, 34) angeordnet ist, und deren axiale Breite L₃₃ mindestens 1,1 mal so groß wie die axiale Breite L₃₂, L₃₄ der breitesten Arbeitsscheitellage ist, **dadurch gekennzeichnet, daß** die Verstärkungselemente der zusätzlichen Lage (33) durchgehende, unausdehnbare und im wesentlichen radiale metallische Elemente aus Stahl sind.

2. Luftreifen nach Anspruch 1, **dadurch gekennzeichnet, daß** die zusätzliche Lage (33) eine Meridiankrümmung im wesentlichen gleich Null besitzt.

3. Luftreifen nach einem der Ansprüche 1 bis 2, **dadurch gekennzeichnet, daß** die zusätzliche Lage (33) aus umschnürten Metallseilen gebildet ist, wobei ihr Kompressions-Sekansmodul für eine relative Kontraktion von 0,4 % zwischen 0,33 und 0,66 so groß ist wie ihr Ausdehnungs-Sekansmodul für eine relative Längung gleicher Größenordnung.

4. Luftreifen nach einem der Ansprüche 1 bis 3, **dadurch gekennzeichnet, daß** die Scheitelbewehrung (3) außerdem eine durchgehende, sogenannte Schutzscheitellage (35) aufweist, die radial über der letzten Arbeitslage (34) liegt, aus elastischen Metallseilen besteht, und deren axiale Breite L₃₅ mindestens gleich der axialen Breite L₃₄ der Arbeitslage ist, die radial am weitesten außen liegt.

5. Luftreifen nach einem der Ansprüche 1 bis 4, **dadurch gekennzeichnet, daß** die Scheitelbewehrung (3) radial innen zwischen der Karkassenbewehrung (1) und der radial innen liegenden Arbeitslage (32), die der Karkassenbewehrung (1) am nächsten liegt, durch eine sogenannte Triangulationslage (31) aus unausdehnbaren Verstärkungselementen vervollständigt wird, die mit der Umfangsrichtung einen Winkel von mehr als 60° bilden, der die gleiche Richtung wie der Winkel aufweist, der von den Verstärkungselementen der Arbeitslage (32) gebildet wird.

6. Luftreifen nach Anspruch 5, **dadurch gekennzeichnet, daß** die Triangulationslage (31) eine axiale Breite L₃₁ aufweist, die größer ist als die Breite L₃₂, L₃₄ der breitesten Arbeitslage (32, 34).
